(19) Europäisches Patentamt
European Patent Office
Office européen des brevets

(11) **EP 4 645 453 A1**

(12) **EUROPEAN PATENT APPLICATION**
published in accordance with Art. 153(4) EPC

(43) Date of publication:
**05.11.2025 Bulletin 2025/45**

(21) Application number: **23912700.4**

(22) Date of filing: **14.12.2023**

(51) International Patent Classification (IPC):
*H01M 4/36* (2006.01)     *H01M 4/587* (2010.01)
*H01M 4/133* (2010.01)     *H01M 10/052* (2010.01)
*C01B 32/22* (2017.01)     *H01M 4/02* (2006.01)

(52) Cooperative Patent Classification (CPC):
C01B 32/22; H01M 4/02; H01M 4/133; H01M 4/36;
H01M 4/587; H01M 10/052; Y02E 60/10

(86) International application number:
**PCT/KR2023/020699**

(87) International publication number:
**WO 2024/144025 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 KR 20220186254**

(71) Applicant: Posco Future M Co., Ltd.
**Pohang-si, Gyeongsangbuk-do 37918 (KR)**

(72) Inventors:
• **KIM, Dae Sik**
**Pohang-si, Gyeongsangbuk-do 37918 (KR)**
• **LEE, Heon Young**
**Pohang-si, Gyeongsangbuk-do 37918 (KR)**

• **CHOI, Hyun Ki**
**Pohang-si, Gyeongsangbuk-do 37918 (KR)**
• **KO, Seunghyun**
**Pohang-si, Gyeongsangbuk-do 37918 (KR)**
• **KIM, Ga Eun**
**Pohang-si, Gyeongsangbuk-do 37918 (KR)**
• **JANG, Yeonghun**
**Pohang-si, Gyeongsangbuk-do 37918 (KR)**
• **LEE, Jae Hyeon**
**Pohang-si, Gyeongsangbuk-do 37918 (KR)**
• **KWON, Ki Min**
**Pohang-si, Gyeongsangbuk-do 37918 (KR)**

(74) Representative: **Meissner Bolte Partnerschaft mbB**
**Patentanwälte Rechtsanwälte**
**Postfach 86 06 24**
**81633 München (DE)**

(54) **NEGATIVE ELECTRODE ACTIVE MATERIAL FOR LITHIUM SECONDARY BATTERY, METHOD OF MANUFACTURING SAME, AND LITHIUM SECONDARY BATTERY COMPRISING SAME**

(57)    The present embodiments relate to a negative electrode active material, a method for manufacturing the same, a negative electrode comprising the same, and a lithium secondary battery comprising the same. The negative electrode active material includes a core portion comprising at least one coarse graphite particle having an average particle diameter (D50) ranging from 5 to 20 μm and at least one fine graphite particle having an average particle diameter (D50) of less than 5 μm, wherein the fine graphite particles account for from 5 wt% to 30 wt% based on the total weight of the coarse graphite particles and the fine graphite particles.

[Fig. 1]

**Description**

## FIELD OF THE INVENTION

The present embodiments relate to a lithium secondary battery, and more particularly, to a negative electrode active material for a lithium secondary battery, a method for manufacturing the same, and a lithium secondary battery including the same.

## DESCRIPTION OF THE RELATED ART

With the growing societal concern over the depletion of fossil fuels and the environmental pollution caused by their use, eco-friendly energy sources have been receiving increasing attention as a potential solution. Among these eco-friendly energy sources, electric energy has drawn significant interest, particularly lithium secondary batteries.

Lithium secondary batteries are being applied not only to small electronic devices and portable IT devices but also to electric vehicles and energy storage systems, with their range of applications continuously expanding. As the application of lithium secondary batteries broadens, the development of new materials for high capacity and high output performance becomes increasingly important. Among the components of lithium secondary batteries, the negative electrode material plays a role in storing lithium ions and is directly related to the capacity and lifespan of the battery.

Various forms of carbon-based materials that allow the intercalation and deintercalation of lithium, such as artificial graphite, natural graphite, and hard carbon, have been applied as negative electrode materials. Graphite, in particular, exhibits a low discharge voltage of 0.2 V versus lithium, enabling batteries using graphite as the negative electrode active material to achieve a high discharge voltage of 3.6 V, thereby offering advantages in terms of energy density. Additionally, graphite ensures long battery life due to its excellent reversibility and is thus the most widely used material.

Natural graphite, in particular, is cost-effective and provides electrochemical properties similar to those of artificial graphite, which makes it advantageous as a negative electrode material. However, natural graphite typically has a plate-like morphology with a large surface area and exposed edge portions. When applied as a negative electrode active material, these edge portions are susceptible to electrolyte infiltration and decomposition reactions. Consequently, delamination or destruction of the edge portions can occur, leading to significant irreversible reactions. Furthermore, when the material is processed into electrode plates, the graphite particles are compressed and aligned flat on the current collector, hindering electrolyte impregnation and thus deteriorating charge/discharge performance.

To address these issues, efforts have been made to modify natural graphite into smoother surface morphologies through post-treatment processes such as spheroidization, in order to reduce irreversible reactions and improve electrode processability.

Commercialized graphite, used as a negative electrode material, undergoes minimal structural changes during lithium ion intercalation and deintercalation, enabling continuous redox reactions and exhibiting excellent cycle performance and high theoretical capacity. However, graphite can only accommodate one lithium ion per six carbon atoms, resulting in a limited theoretical capacity of about 372 mAh/g, which poses a constraint in meeting the demands for high capacity and high power.

In addition, the mobility of lithium ions is generally much lower in the solid phase compared to their diffusion rate in the electrolyte. To enhance lithium ion mobility, smaller particle sizes are advantageous, as they shorten the solid-state diffusion distance, making them particularly beneficial for charging, especially rapid charging.

Accordingly, research into utilizing fine powders with small particle sizes continues to progress.

## SUMMARY OF THE INVENTION

## TECHNICAL PROBLEM

The technical problem to be solved by the present invention is to provide a negative electrode active material that enables high lithium ion mobility during charging and discharging of a lithium secondary battery, thereby offering favorable rapid-charging characteristics, reduces manufacturing costs by utilizing fine powder by-products with small particle sizes, and exhibits excellent alignment and output characteristics.

Another technical problem to be solved by the present invention is to provide a method for manufacturing the negative electrode active material having the above-mentioned advantages.

Yet another technical problem to be solved by the present invention is to provide a lithium secondary battery comprising the negative electrode active material having the above-mentioned advantages.

**TECHNICAL SOLUTION**

According to one embodiment of the present invention, a negative electrode active material may include coarse graphite particles derived from at least one coarse carbon particle having an average particle diameter (D50) of 5 to 20 $\mu$m; and fine graphite particles derived from at least one fine carbon particle having an average particle diameter (D50) of less than 5 $\mu$m, wherein the weight of the fine graphite particles accounts for 5 to 30 wt% of the total weight of the coarse graphite particles and the fine graphite particles.

In one embodiment, the negative electrode active material may exhibit a voltage value of -0.170 V or less at a state of charge (SOC) of 50% or more.

In one embodiment, the negative electrode active material may satisfy the following Equation 1:

<Equation 1>

$$0.65 \leq ([\text{SOC } 50\%] - [\text{SOC } 20\%]) / [\text{SOC } 20\%] \leq 2.00$$

(Wherein [SOC 20%] and [SOC 50%] represent the average voltage values at SOC 20% and 50%, respectively.)

In one embodiment, a coating layer may be included on the surface of each of the coarse graphite particles and the fine graphite particles, and the coating layer may have a thickness in the range of 5 to 100 nm.

In one embodiment, the coarse graphite particles and the fine graphite particles may be artificial graphite, natural graphite, or a combination thereof.

In one embodiment, the artificial graphite, natural graphite, or a combination thereof may be derived from coal-based needle coke (calcined or green), isotropic coke (calcined or green), petroleum-based needle coke (calcined or green), general coke (calcined or green), or a combination thereof.

In one embodiment, the negative electrode active material may have an average particle diameter (D50) of 5 to 20 $\mu$m.

In one embodiment, the negative electrode active material may have an average particle diameter (D50) of 12.5 to 18.5 $\mu$m.

In one embodiment, the span value (D90 - D10)/D50 may be 1.30 or less.

In one embodiment, the negative electrode active material may have a specific surface area (BET) in the range of 0.50 to 1.80 m$^2$/g.

In one embodiment, the negative electrode active material may have a tap density in the range of 0.70 to 1.20 g/cc.

In one embodiment, the orientation ($I_{004}/I_{001}$) may be in the range of 1.7 to 2.5. (Wherein $I_{004}$ and $I_{001}$ represent the peak intensities of the (004) and (001) planes, respectively.)

Another embodiment of the present invention provides a negative electrode for a lithium secondary battery, comprising 96 to 99 wt% of the negative electrode active material according to any one of claims 1 to 12, 0.5 to 1.5 wt% of a thickener, and the remainder being a binder.

Still another embodiment of the present invention provides a lithium secondary battery comprising the aforementioned negative electrode for a lithium secondary battery, a positive electrode comprising a positive electrode active material, and an electrolyte.

Still another embodiment of the present invention provides a method for manufacturing a negative electrode active material, comprising:

preparing at least one coarse carbon particle having an average particle diameter (D50) of 5 to 20 $\mu$m and at least one fine carbon particle having an average particle diameter (D50) of less than 5 $\mu$m;
carbonizing each of the coarse carbon particle and the fine carbon particle;
graphitizing the carbonized coarse carbon particles and fine carbon particles, respectively;
coating the graphitized coarse graphite particles and fine graphite particles, respectively; and
mixing the coated coarse graphite particles and fine graphite particles such that the fine graphite particles are present in an amount of 5 to 20 wt%.

In one embodiment, the coarse carbon particles and fine carbon particles may be derived from coal-based needle coke (calcined or green), isotropic coke (calcined or green), petroleum-based needle coke (calcined or green), general coke (calcined or green), or a combination thereof.

In one embodiment, the step of preparing at least one coarse carbon particle having an average particle diameter (D50) of 5 to 20 $\mu$m and at least one fine carbon particle having an average particle diameter (D50) of less than 5 $\mu$m may include a grinding step to reduce the particle diameter of the coarse carbon particle to 5 to 10 $\mu$m.

In one embodiment, the step of carbonizing the coarse carbon particles and fine carbon particles, respectively, may include a step of mixing a coating material in an amount of 3 to 30 parts by weight based on 100 parts by weight of each carbonized coarse or fine carbon particle to prepare secondary particles.

In one embodiment, the step of graphitizing the carbonized coarse and fine carbon particles may be performed at a temperature of 2,800°C or higher.

In one embodiment, the step of coating the graphitized coarse and fine graphite particles may include a step of mixing a coating material in an amount of 1 to 5 parts by weight based on 100 parts by weight of each of the graphitized coarse or fine graphite particles to prepare a coated product.

## ADVANTAGEOUS EFFECTS

According to one embodiment of the present invention, a negative electrode active material for a lithium secondary battery including both fine particles and coarse particles is provided, whereby during charging and discharging of the lithium secondary battery, the mobility of lithium ions is enhanced, resulting in favorable fast-charging characteristics, and manufacturing costs can be reduced by utilizing fine powder by-products with small particle sizes, while providing a negative electrode active material exhibiting excellent orientation characteristics and output performance.

## BRIEF DESCRIPTION OF THE DRAWINGS

FIG. 1 illustrates a negative electrode active material for a lithium secondary battery according to one embodiment of the present invention.

FIG. 2 is a flowchart showing a method for manufacturing a graphite-based negative electrode material according to one embodiment of the present invention.

FIGS. 3a to 3d are micrographs of the negative electrode active material for a lithium secondary battery according to one embodiment and a comparative example of the present invention.

FIGS. 4a and 4b are micrographs of the negative electrode active material for a lithium secondary battery according to one embodiment and a comparative example of the present invention.

FIG. 5 shows the results of a fast-charging test according to one embodiment and a comparative example of the present invention.

## DETAILED DESCRIPTION OF THE EMBODIMENTS

The terms such as "first", "second", and "third", etc., are used to describe various portions, components, regions, layers, and/or sections, but are not limited thereto. These terms are merely used to distinguish one portion, component, region, layer, or section from another. Accordingly, a "first" portion, component, region, layer, or section described hereinafter may be referred to as a "second" portion, component, region, layer, or section without departing from the scope of the present invention.

The terminology used herein is intended only to describe particular embodiments and is not intended to limit the scope of the present invention. As used herein, the singular forms also include the plural forms unless the context clearly indicates otherwise. The term "comprising/including/involving/having" as used in the specification is intended to specify the presence of stated features, regions, integers, steps, operations, elements, and/or components, but does not preclude the presence or addition of one or more other features, regions, integers, steps, operations, elements, and/or components.

When a part is referred to as being "on" or "above/over" another part, it may be directly on or above the other part or intervening elements may be present therebetween. In contrast, when a part is referred to as being "directly on" another part, it means that no intervening element exists between them.

Unless otherwise defined, all terms including technical and scientific terms used herein have the same meanings as commonly understood by one of ordinary skill in the art to which the present invention belongs. Commonly used predefined terms shall be additionally interpreted to be consistent with relevant technical literature and the current disclosure, and unless otherwise defined, shall not be interpreted in an idealized or overly formal sense.

Hereinafter, embodiments of the present invention will be described in detail. However, these are presented by way of example only and are not intended to limit the invention, which is defined only by the scope of the claims that follow.

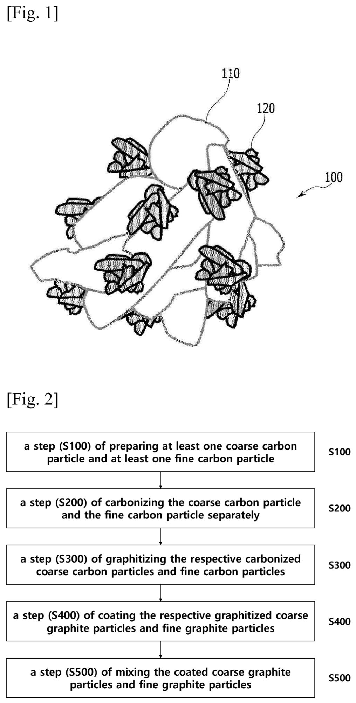

FIG. 1 illustrates a negative electrode active material for a lithium secondary battery according to one embodiment of the present invention.

Referring to FIG. 1, a negative electrode active material 100 for a lithium secondary battery may include at least one coarse graphite particle 110 and at least one fine graphite particle 120. The coarse graphite particle 110 may be a graphite particle having a larger diameter than the fine graphite particle 120.

In one embodiment, the coarse graphite particle 110 and the fine graphite particle 120 may be artificial graphite, natural graphite, or a combination thereof. Specifically, the coarse graphite particle 110 and the fine graphite particle 120 may be artificial graphite.

In one embodiment, the coarse graphite particle 110 and the fine graphite particle 120 may have a morphology that is amorphous, flake-like, angular, plate-like, spherical, fibrous, dot-like, or a combination thereof. In one embodiment, the coarse graphite particle 110 and the fine graphite particle 120 may be derived from coal-based needle coke (calcined or green), isotropic coke (calcined or green), petroleum-based needle coke (calcined or green), general coke (calcined or green), or a combination thereof. Specifically, the coarse graphite particle 110 and the fine graphite particle 120 may be derived from green coke (raw coke).

The green coke refers to a product obtained by a coking reaction under high pressure and high temperature using coal or petroleum residues or processed materials such as pitch. Specifically, depending on the composition of the raw material and the coking process conditions, anisotropic or needle coke with a high degree of carbon structure orientation in the uniaxial direction, or isotropic or pitch coke with a low degree of orientation, may be obtained. The term "green" refers to the state immediately after the coking process and before undergoing any heat treatment such as calcination or carbonization, and contains a certain fraction of volatiles.

In one embodiment, the green coke may include needle coke, isotropic coke, pitch coke, or a combination thereof. When using green coke, a negative electrode active material for a lithium secondary battery with low expansion ratio and excellent high-rate charge/discharge characteristics may be provided. In addition, since it does not require a separate heat treatment process for removal of volatiles as in calcined coke, green coke may provide superior cost competitiveness.

The coarse graphite particle 110 and fine graphite particle 120 refer to the graphitized and coated states of the coarse carbon particle and fine carbon particle, respectively, as described later in FIG. 2. The details of the green coke can be referred to in the sections describing the coarse carbon particle and fine carbon particle.

In one embodiment, the coarse carbon particle may have an average particle diameter in the range of 5 to 20 $\mu$m. Specifically, the coarse carbon particle may have an average particle diameter in the range of 8 to 15 $\mu$m, more specifically in the range of 8 to 12 $\mu$m.

In one embodiment, the coarse graphite particle 110 may have an average particle diameter in the range of 10 to 15 $\mu$m. Specifically, the coarse graphite particle 110 may have an average particle diameter in the range of 11.5 to 13.5 $\mu$m.

When the particle size of the coarse carbon particle and the coarse graphite particle 110 exceeds the upper limit of the above range, there may be a problem of deteriorated efficiency characteristics and output performance. When it falls below the lower limit, the effect of enhancing electrochemical properties through mixing of fine carbon particles may not be obtained, the specific surface area may increase, tap density may decrease, and electrode swelling may increase. In one embodiment, the fine carbon particle may have an average particle diameter of less than 5 $\mu$m. Specifically, the fine graphite particle may have an average particle diameter of 3 $\mu$m or less. In one embodiment, the fine graphite particle 120 may have an average particle diameter of less than 13 $\mu$m. Specifically, the average particle diameter may be in the range of 10 to less than 13 $\mu$m.

When the particle size of the fine carbon particle and fine graphite particle 120 exceeds the upper limit, uniform distribution between the coarse graphite particles 110 may not be achieved, and the effect of mixing may not be manifested. When the size is smaller than the lower limit, charge/discharge capacity may be reduced, specific surface area may increase, tap density may decrease, and electrode swelling may increase.

By satisfying the above particle size ranges, the fine graphite particles 120 can be uniformly distributed between the coarse graphite particles 110, thereby improving orientation and output performance of the negative electrode active material.

In one embodiment, the negative electrode active material may have an average particle diameter (D50) in the range of 5 to 20 $\mu$m. Specifically, the average particle diameter may be in the range of 12.5 to 18.5 $\mu$m, more specifically, in the range of 14.5 to 17.0 $\mu$m.

When the particle size exceeds the upper limit, efficiency and output performance may degrade. When it is below the lower limit, the electrochemical improvement effect due to the mixing of coarse and fine graphite particles may not be manifested, and issues such as increased surface area, reduced tap density, and increased electrode swelling may arise.

In one embodiment, the fine graphite particle 120 may account for 5 to 30 wt% of the total amount of coarse and fine graphite particles. Specifically, it may account for 5 to 15 wt%, and more specifically, 8 to 12 wt%.

By satisfying the above range, high specific surface area and excellent orientation may be achieved. Exceeding the upper limit may result in reduced tap density and increased swelling, whereas falling below the lower limit may result in poor cost competitiveness.

In one embodiment, each of the coarse graphite particle 110 and fine graphite particle 120 may include a coating layer on its surface, and the coating layer may have a thickness in the range of 5 to 100 nm. Specifically, the coating layer may have a thickness in the range of 20 to 80 nm.

If the coating layer exceeds the upper limit, capacity may degrade. If it is below the lower limit, specific surface area may increase and charging rate may decrease.

The coating layer may be formed from a carbon precursor such as sucrose, phenol resin, naphthalene resin, polyvinyl alcohol resin, furfuryl alcohol resin, polyacrylonitrile resin, polyamide resin, furan resin, cellulose resin, styrene resin, polyimide resin, epoxy resin, vinyl chloride resin, coal-based pitch, petroleum-based pitch, polyvinyl chloride, mesophase pitch, tar, block copolymers, low molecular weight heavy oil, or mixtures thereof.

In one embodiment, the Span value of the negative electrode active material 100 may be in the range of 0.7 to 2.0. Specifically, the Span value may be 1.0 to 1.3, and more specifically, in the range of 1.150 to 1.270.

The Span value refers to the value calculated using the equation (D90 - D10)/D50, based on the particle size distribution indices D10, D50, and D90. D10, D50, and D90 refer to the particle diameters corresponding to 10%, 50%, and 90% cumulative volume fractions, respectively.

If the Span value exceeds the upper limit, particle size distribution may become uneven. When fine graphite particles 120 are mixed and coated, the Span value tends to decrease compared to coarse graphite particles 110. Falling below the lower limit may allow for more uniform electrochemical properties.

In one embodiment, the negative electrode active material 100 may have a D90/D10 value in the range of 3.33 to 3.86. Specifically, the D90/D10 value may be in the range of 3.40 to 3.80, and more specifically, 3.40 to 3.50. Satisfying this range improves product uniformity, while deviation may cause processing issues during electrode manufacturing.

In one embodiment, the negative electrode active material 100 may have a specific surface area (BET) in the range of 0.50 to 1.80 m$^2$/g.

In one embodiment, the tap density of the negative electrode active material 100 may be in the range of 0.70 to 1.20 g/cc.

In one embodiment, the orientation ($I_{004}/I_{001}$) of the negative electrode active material 100 may be in the range of 1.7 to 2.5. The orientation refers to the degree of alignment of the hexagonal lattice plane in the thickness direction of the electrode, determined by the peak intensity ratio of the (004) and (001) planes from X-ray diffraction using JCPDS (ASTM) data.

Exceeding the upper limit may cause electrode swelling during charging. Falling below the lower limit may cause poor charge characteristics and increased swelling.

In one embodiment, the D(002) spacing measured by X-ray diffraction may be in the range of 3.360 to 3.362 nm, representing the interlayer spacing of the carbon hexagonal planes. If this range is exceeded, crystallinity may be insufficient, charge/discharge capacity may degrade, and particle strength may become excessively high.

In one embodiment, the Lc value of the negative electrode active material 100 may be in the range of 500 to 900 nm. The Lc value refers to the longitudinal size of the graphite crystallite. If the Lc value exceeds the upper limit of the above range, the crystallinity may be insufficient, the charge/discharge capacity may decrease, and the particle strength may become excessively high.

In one embodiment, the La value of the negative electrode active material 100 may be in the range of 1,800 to 2,200 nm. The La value refers to the lateral size of the graphite crystallite. If the La value exceeds the upper limit of the above range, the crystallinity may be insufficient, the charge/discharge capacity may decrease, and the particle strength may become excessively high.

In one embodiment, the negative electrode active material may exhibit a voltage value of -0.170 V or less at a state of charge (SOC) of 50% or more. By satisfying the above voltage condition at SOC 50% or higher, the negative electrode active material can be suitable for high-rate charging applications.

In one embodiment, the negative electrode active material of the present invention may satisfy the following Equation 1:

$$[\text{Equation 1}]$$

$$0.65 \leq ([\text{SOC } 50\%] - [\text{SOC } 20\%]) / [\text{SOC } 20\%] \leq 2.00$$

(Wherein [SOC 20%] and [SOC 50%] refer to the average voltage values at SOC 20% and 50%, respectively.)

Equation 1 serves as an index for evaluating negative electrode active materials suitable for high-rate charging. Specifically, Equation 1 may satisfy a range of 0.65 to 2.00, more specifically 0.80 to 2.00, even more specifically 0.80 to 1.5, and most preferably 0.80 to 1.25. By satisfying the above-defined range of Equation 1, the negative electrode active material can be effectively utilized for high-rate charging. If the condition defined in Equation 1 is not satisfied, the material may not be suitable for such an application.

In one embodiment, a negative electrode for a lithium secondary battery comprising the negative electrode active material 100 may be provided. The negative electrode may include the negative electrode active material 100, a thickener, and a binder. The negative electrode active material 100 may refer to the previously described negative electrode active material within a consistent scope.

The thickener is an additive used to increase the viscosity of the electrode composition, and may include at least one selected from carboxymethyl cellulose (CMC), guar gum, uncrosslinked polyacrylic acid, lightly crosslinked polyacrylic acid, and polyvinyl alcohol.

The binder serves to enhance the adhesion between the constituent particles of the negative electrode material and also facilitate adhesion to the current collector. The binder may include at least one selected from polyvinylidene fluoride (PVDF), ethylene-propylene-diene terpolymer (EPDM), styrene-butadiene rubber (SBR), acrylonitrile-butadiene rubber (NBR), fluororubber, polyvinyl acetate, polymethyl methacrylate (PMMA), polyethylene, and cellulose nitrate.

In one embodiment, a lithium secondary battery comprising the negative electrode active material 100 may be provided. In one embodiment, the lithium secondary battery may include a negative electrode comprising the negative electrode active material 100, a positive electrode comprising a positive electrode active material, and an electrolyte. Specifically, the lithium secondary battery may further include a separator disposed between the positive electrode and the negative electrode.

The negative electrode may be manufactured by preparing a composition for forming a negative electrode active material layer by mixing the negative electrode active material prepared according to one embodiment of the present invention, a binder, and optionally a conductive material, and applying the composition onto a negative electrode current collector. The negative electrode current collector may be copper foil.

The binder may include, but is not limited to, polyvinyl alcohol, carboxymethyl cellulose/styrene-butadiene rubber (CMC/SBR), hydroxypropyl cellulose, diacetyl cellulose, polyvinyl chloride, polyvinylpyrrolidone, polytetrafluoroethylene, polyvinylidene fluoride, polyethylene, or polypropylene.

The conductive material is not particularly limited as long as it provides conductivity without causing chemical changes in the battery. Specific examples include graphite such as natural graphite or artificial graphite; carbon blacks such as acetylene black, ketjen black, channel black, furnace black, lamp black, and thermal black; conductive fibers such as carbon fibers and metal fibers; metal powders such as fluorinated carbon, aluminum, and nickel powders; conductive whiskers such as zinc oxide and potassium titanate; conductive metal oxides such as titanium oxide; and conductive polymers such as polyphenylene derivatives. The conductive material may be mixed in an amount of 0.1 wt% to 30 wt% based on the total weight of the composition for forming the negative electrode active material layer.

The positive electrode may be prepared by mixing a positive electrode active material, a binder, and optionally a conductive material to form a composition for forming a positive electrode active material layer and applying the composition onto a positive electrode current collector. The binder and conductive material may be the same as those used for the negative electrode.

The positive electrode active material may include at least one selected from the group consisting of $LiCoO_2$, $LiNiO_2$, $LiNi_xMn_yO_2$, $Li_{1+z}Ni_xMn_yCo_{1-x-y}O_2$, $LiNi_xCo_yAlzO_2$, $LiV_2O_5$, $LiTiS_2$, $LiMoS_2$, $LiMnO_2$, $LiCrO_2$, $LiMn_2O_4$, $LiFeO_2$, $LiFePO_4$, and combinations thereof, where x is from 0.3 to 0.8, y is from 0.1 to 0.45, and z is independently from 0 to 0.2. More specifically, the positive electrode may include $LiFePO_4$, $LiCoO_2$, NCM811, or NCM622.

The positive electrode current collector may include, for example, stainless steel, aluminum, nickel, titanium, sintered carbon, or surface-treated aluminum or stainless steel with carbon, nickel, titanium, silver, or the like. The positive electrode active material may be a compound capable of reversible intercalation and deintercalation of lithium.

The electrolyte filled in the lithium secondary battery may be a non-aqueous electrolyte or a known solid electrolyte in which a lithium salt is dissolved. The lithium salt may include at least one selected from the group consisting of $LiPF_6$, $LiBF_4$, $LiSbF_6$, $LiAsF_6$, $LiClO_4$, $LiCF_3SO_3$, $Li(CF_3SO_2)_2N$, $LiC_4F_9SO_3$, $LiAlO_4$, $LiAlCl_4$, LiCl, and LiI.

The non-aqueous electrolyte solvent may include, for example, cyclic carbonates such as ethylene carbonate, propylene carbonate, butylene carbonate, and vinylene carbonate; linear carbonates such as dimethyl carbonate, methyl ethyl carbonate, and diethyl carbonate; esters such as methyl acetate, ethyl acetate, propyl acetate, methyl propionate, ethyl propionate, and $\gamma$-butyrolactone; ethers such as 1,2-dimethoxyethane, 1,2-diethoxyethane, tetrahydrofuran, 1,2-dioxane, and 2-methyltetrahydrofuran; nitriles such as acetonitrile; and amides such as dimethylformamide. These solvents may be used alone or in combination. In particular, a mixed solvent of cyclic carbonate and linear carbonate may be preferably used.

The electrolyte may also be a gel-type polymer electrolyte formed by impregnating a liquid electrolyte into a polymer such as polyethylene oxide or polyacrylonitrile, or an inorganic solid electrolyte such as LiI or $Li_3N$. The separator may include an olefin-based polymer such as polypropylene having chemical resistance and hydrophobicity, or a sheet or nonwoven fabric made of glass fiber, polyethylene, or the like. When a solid electrolyte such as a polymer is used, it may also function as a separator.

FIG. 2 is a flowchart illustrating a method for manufacturing a negative electrode active material according to one embodiment of the present invention.

Referring to FIG. 2, the method for manufacturing a negative electrode active material may include:
a step (S100) of preparing at least one coarse carbon particle having an average particle diameter (D50) in the range of 5 to 15 $\mu$m and at least one fine carbon particle having an average particle diameter (D50) of less than 5 $\mu$m; a step (S200) of carbonizing the coarse carbon particle and the fine carbon particle separately; a step (S300) of graphitizing the respective carbonized coarse carbon particles and fine carbon particles; a step (S400) of coating the respective graphitized coarse graphite particles and fine graphite particles; and a step (S500) of mixing the coated coarse graphite particles and fine graphite particles such that the fine graphite particles are present in an amount of 5 to 30 wt%.

The coarse and fine carbon particles serve as carbon-based raw materials for manufacturing the negative electrode active material. Specifically, the coarse carbon particle and fine carbon particle may be green coke as previously described with reference to FIG. 1, and further details may be referred to therein without inconsistency.

In step S100, the coarse and fine carbon particles are prepared separately.

In step S200, the coarse and fine carbon particles are carbonized independently. The carbonized coarse and fine particles may be mixed with a coating material in an amount of 3 to 30 parts by weight based on 100 parts by weight of each carbonized particle to prepare secondary particles.

In step S300, the respective carbonized coarse and fine carbon particles may be graphitized at a temperature of 2,800°C or higher, specifically within a range of 2,800°C to 3,200°C. The graphitization of the coarse and fine carbon particles may be performed separately within the above temperature range. If the temperature is outside the defined range, there may be deterioration in electrochemical properties or thermal shock issues with the equipment.

In one embodiment, step S300 may be performed for at least 1 hour, specifically for 2 hours or more.

In step S400, the graphitized coarse graphite particles and fine graphite particles may be coated by mixing a coating material in an amount of 1 to 5 parts by weight based on each graphitized particle, thereby forming coated products. The coating may be conducted separately for the coarse and fine graphite particles.

In step S500, the coated coarse and fine graphite particles are mixed such that the fine graphite particles account for 5 to 30 wt% of the total. Specifically, the fine graphite particles may be present in an amount of 5 to 25 wt%, more specifically 5 to 15 wt%. If the upper limit is exceeded, the capacity, surface area, and density may be degraded. If below the lower limit, the material may not be suitable for high-rate charging applications.

In step S100, the coarse carbon particle may have a larger diameter than the fine carbon particle. In one embodiment, the coarse carbon particle may have a particle diameter in the range of 5 to 15 $\mu$m, specifically 8 to 12 $\mu$m.

If the particle size exceeds the upper limit, the material may not be applicable to fast-charging. If below the lower limit, the capacity may decrease and surface area may increase.

The fine carbon particle may have a particle diameter of 5 $\mu$m or less, specifically 3 $\mu$m or less. If above the upper limit, it may not be suitable for high-rate charging; if below the lower limit, capacity reduction and surface area increase may occur.

In one embodiment, the mixing of coarse and fine carbon particles in step S100 may include adjusting the weight of the fine carbon particles to 3 to 30 wt% of the total amount. Exceeding the upper limit may lead to reduced density and increased surface area, while falling below the lower limit may limit application to fast-charging.

By satisfying the particle diameter ranges and the compositional range of the fine carbon particles, a negative electrode active material with excellent orientation and output characteristics can be manufactured.

In one embodiment, the coarse and fine carbon particles may be green coke. The green coke may be coal-based needle coke (calcined or green), isotropic coke (calcined or green), petroleum-based needle coke (calcined or green), general coke (calcined or green), or a combination thereof, as previously described in FIG. 1.

In one embodiment, step S100 may include grinding and milling the coarse and fine carbon particles. The grinding and milling may be performed using one or more of ball milling, mechanofusion milling, shaker milling, planetary milling, attritor milling, disk milling, shape milling, nauta milling, and nobilta milling. Through this process, the coarse and fine carbon particles within the desired size range may be obtained.

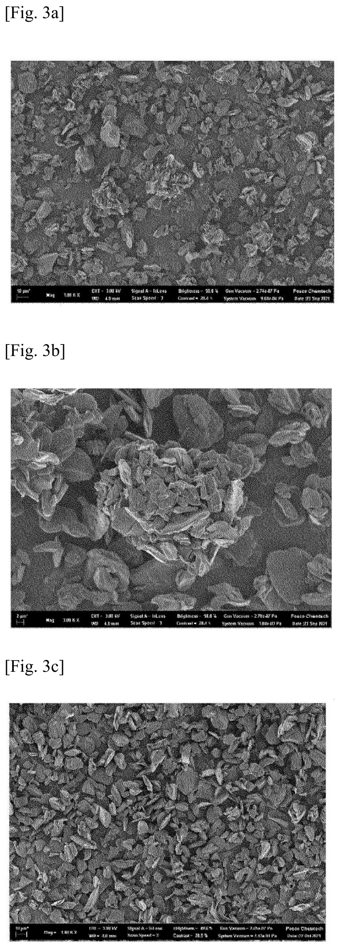

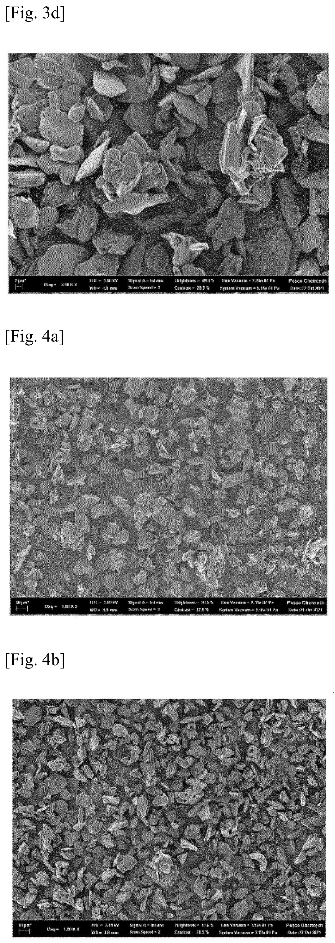

FIGS. 3a and 3b are micrographs of the negative electrode active material according to an embodiment of the present invention, and FIGS. 3c and 3d are micrographs of the negative electrode active material according to a comparative example.

Referring to FIGS. 3a and 3b, it can be confirmed that the fine graphite particles are located between the coarse graphite particles. Specifically, the active material shown in FIGS. 3a and 3b may correspond to Example 2 in Table 2.

Referring to FIGS. 3c and 3d, it can be confirmed that the negative electrode active material comprises only coarse graphite particles. Specifically, the active material shown in FIGS. 3c and 3d may correspond to Comparative Example 2 in Table 2.

FIG. 4a is a micrograph of a negative electrode active material including a coated portion according to one embodiment of the present invention, and FIG. 4b is a micrograph of a negative electrode active material including a coated portion according to a comparative example.

Referring to FIG. 4a, a micrograph is shown of a negative electrode active material in which both coarse and fine graphite particles derived from needle green coke were graphitized and coated.

In contrast, FIG. 4b shows a micrograph of a negative electrode active material obtained by graphitizing and coating only coarse graphite particles derived from needle green coke.

The following example is merely one embodiment of the present invention and is not intended to limit the scope of the present invention.

**<Experimental Example>**

**<Example>**

**1. Method for Preparing Negative Electrode Active Material**

Green coke was used as a carbon precursor. Specifically, green coke was pulverized using a grinder such that the resulting particle sizes were 9 μm and 2 μm, respectively. The pulverized particles were classified as coarse carbon particles and fine carbon particles. Each type of carbon particle was then mixed with 8 parts by weight of pitch having a softening point of 250°C. The mixture was stirred using a heatable mixer for 9 hours to produce secondary particles.

Subsequently, the secondary particles of the coarse carbon particles and fine carbon particles were graphitized by heating to 3,000°C for 7 hours, thereby producing artificial graphite.

Each of the resulting coarse graphite particles and fine graphite particles was mixed with 3 parts by weight of pitch having a softening point of 250°C, and then subjected to carbonization at 1,200°C for 2 hours in an inert atmosphere, thereby producing coated artificial graphite.

The coated coarse graphite particles and fine graphite particles obtained from the respective carbon particles were then mixed in a weight ratio of 90% to 10% to prepare a negative electrode active material.

**2. Method for Fabricating Lithium Secondary Battery**

A slurry for the negative electrode active material was prepared by mixing 95.6 wt% of the negative electrode active material prepared in Section 1, 3.4 wt% of a binder comprising carboxymethyl cellulose and styrene-butadiene rubber, and 1.0 wt% of Super P conductive material in distilled water as a solvent.

The resulting slurry was applied to a copper (Cu) current collector, dried at 100°C for 10 minutes, and then compressed using a roll press. Thereafter, the coated electrode was vacuum-dried in an oven at 100°C for 12 hours to produce a negative electrode. After vacuum drying, the electrode density of the negative electrode was adjusted to 1.55 g/cc.

Lithium metal (Li-metal) was used as the counter electrode, and the electrolyte was prepared by dissolving 1 M of $LiPF_6$ in a mixed solvent of ethylene carbonate (EC) and dimethyl carbonate (DMC) at a volume ratio of 2:8.

Using the above components, a 2032 coin cell-type half-cell was fabricated by a conventional method.

<Comparative Examples 1 and 2>

Comparative Examples 1 and 2 were carried out in the same manner as Example 1, except that only primary particles of green coke having a particle size of 9 μm were used, without mixing coarse and fine particles.

Table 1 below shows the particle size distributions of the coarse carbon particles and fine carbon particles before mixing, as well as the particle size distribution of the product composed of the combined coarse graphite particles. Specifically, the table presents the particle size distribution of the pulverized coarse carbon particles and fine carbon particles, and the particle size distribution of the resulting composite particles prepared from the coarse and fine carbon particles, respectively.

[Table 1]

| | Particle Size Distributions of Pulverized Particles | | |
|---|---|---|---|
| | D10 [μm] | D50 [μm] | D90 [μm] |
| Coarse carbon particles (processed green coke) | 3.8 | 9.6 | 16.3 |
| Fine carbon particles (fine green coke) | 0.8 | 2.3 | 4.9 |
| | Particle Size Distributions of Assembled Particles (Secondary particle) | | |
| | D10 [μm] | D50 [μm] | D90 [μm] |
| Coarse carbon composite particles (processed green coke) | 6.3 | 13.5 | 23.1 |
| Fine carbon composite particles (fine green coke) | 4.1 | 10.5 | 19.1 |

Table 2 below shows the particle size distribution, physical properties, X-ray diffraction (XRD) characteristics, and electrochemical properties of the respective composite particles described in Table 1 after graphitization at 3,000°C.

The tap density was measured in accordance with ASTM-B527. Specifically, 15 g of powder was placed into a 50 mL graduated cylinder and tapped 3,000 times to measure the bulk density.

The specific surface area was measured using the BET method with a Surface Area and Porosity Analyzer (Micromeritics, ASAP2020).

The orientation was measured as follows:

- Target: Cu (Kα line) graphite monochromator

- Slits: Divergence slit = 1°, receiving slit = 0.1 mm, scattering slit = 1°

The 2θ refers to the diffraction angle. The XRD measurement method described above is a non-limiting example, and other measurement techniques may be employed.

[Table 2]

| | Pulverized Particle Size [μm] | | | Physical Properties | | XRD Characteristics | | | | | | Electrochemical Properties | |
|---|---|---|---|---|---|---|---|---|---|---|---|---|---|
| | D10 | D50 | D90 | Tap Density (g/cc) | SSA [m²/g] | D002 [nm] | Lc [nm] | La [nm] | Orientation $(I_{004}/I_{110})$ | Graphit ization Degree (%) | La/Lc | Initial Efficiency (%) | Capacity (mAh/g) |
| Coarse graphite composite particles (processed green coke) | 5.8 | 12.7 | 22.3 | 1.01 | 1.42 | 3.361 | 742 | 1892 | 2.4 | 92 | 2.6 | 94.0 | 348.1 |
| Fine graphite composite particles (fine green coke) | 3.8 | 9.9 | 18.2 | 0.91 | 1.79 | 3.362 | 717 | 1773 | 3.4 | 91 | 2.5 | 93.1 | 349.7 |

Table 3 shows the particle size distribution and other characteristics of Comparative Examples 1 and 2, in which each of the graphitized coarse graphite composite particles or fine graphite composite particles from Table 2 was coated individually, and of Example 1, in which the coarse carbon composite particles and fine carbon composite particles were mixed at a weight ratio of 9:1 prior to coating.

[Table 3]

| | Particle Size [μm] | | | | | Physical Properties | | XRD Characteristics | | | | | | Electrochemical Properties | |
|---|---|---|---|---|---|---|---|---|---|---|---|---|---|---|---|
| | D10 | D50 | D90 | D90/ D10 | SPAN | 탭밀 [g/cc] | SSA [m²/g] | $D_{002}$ [nm] | Lc [nm] | La [nm] | Orient ation ($I_{004}/I_{1\,10}$) | Graph itizati on Degre e (%) | La/Lc | Initial Efficie ncy (%) | Capacity (mAh/g) |
| Coarse graphite particles (coated, molded composite from green coke) | 7.4 | 15.0 | 24.6 | 3.32 | 1.147 | 0.89 | 1.03 | 3.361 | 688 | 1939 | 1.9 | 92 | 2.8 | 92.8 | 350.2 |
| Coarse graphite particles : fine graphite particles = 9:1 (Example) | 7.1 | 14.8 | 24.4 | 3.44 | 1.169 | 0.89 | 0.87 | 3.361 | 703 | 2009 | 2.0 | 92 | 2.9 | 92.8 | 349.8 |
| Fine graphite particles (coated, fine green coke composite) | 5.4 | 12.2 | 20.9 | 3.87 | 1.270 | 0.80 | 14.1 | 3.361 | 694 | 1952 | 2.1 | 92 | 2.8 | 91.3 | 348.7 |

EP 4 645 453 A1

As shown in Table 3, it was confirmed that, unlike the comparative examples, the example exhibited distinct values in terms of Span and D90/D10.

Table 4 below shows the average voltage values of Comparative Example 1 and the Example in the state of charge (SOC) range from 10% to 60%.

[Table 4]

| | SOC [%] | Average Voltage (V) | Equation 1 Value | Remarks |
|---|---|---|---|---|
| Coarse graphite particles (coated molded composite from green coke) | 10 | - 0.045 | 0.625 | Comparative Example 2_1 |
| | 20 | - 0.104 | | Comparative Example 2_2 |
| | 30 | - 0.141 | | Comparative Example 2_3 |
| | 40 | - 0.166 | | Comparative Example 2_4 |
| | 50 | - 0.169 | | Comparative Example 2_5 |
| | 60 | - 0.172 | | Comparative Example 2_6 |
| Coarse graphite : Fine graphite = 9:1 | 10 | - 0.036 | 1.000 | Example 2_1 |
| | 20 | - 0.091 | | Example 2_2 |
| | 30 | - 0.123 | | Example 2_3 |
| | 40 | - 0.164 | | Example 2_4 |
| | 50 | - 0.182 | | Example 2_5 |
| | 60 | - 0.193 | | Example 2_6 |

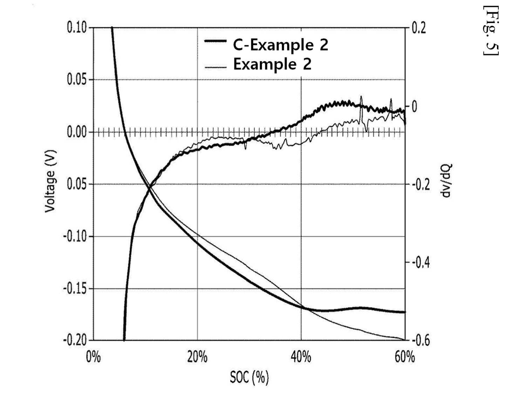

FIG. 5 illustrates the results of a high-rate charging test according to one embodiment and a comparative example of the present invention. Referring to FIG. 5, the figure shows the results of the high-rate charging test for Example 2, which is an embodiment of the present invention, and Comparative Example 2, which is a comparative example thereof.

Upon examining the high-rate charging performance of Example 2 and Comparative Example 2, it was confirmed that, unlike Comparative Example 2, the graph for Example 2 exhibited no inflection point. Accordingly, it was verified that the negative electrode active material of the present invention exhibits excellent output characteristics.

The present invention is not limited to the embodiments described above but may be implemented in various other forms. It will be understood by those of ordinary skill in the art that various modifications and other equivalent forms can be made without departing from the spirit and essential characteristics of the invention. Therefore, the above-described embodiments are to be understood as illustrative and not restrictive in all aspects.

**Claims**

1. A negative electrode active material comprising: coarse graphite particles derived from at least one coarse carbon particle having an average particle diameter (D50) ranging from 5 $\mu$m to 20 $\mu$m; and fine graphite particles derived from at least one fine carbon particle having an average particle diameter (D50) of less than 5 $\mu$m, wherein the fine graphite particles are present in an amount of 5 wt% to 30 wt% based on the total weight of the coarse graphite particles and the fine graphite particles.

2. The negative electrode active material of claim 1, wherein a voltage value at a state of charge (SOC) of 50% or higher is -0.170 V or less.

3. The negative electrode active material of claim 1, satisfying Equation 1 below:

[Equation 1]

$$0.65 \le ([SOC\ 50\%] - [SOC\ 20\%]) / [SOC\ 20\%] \le 2.00$$

wherein [SOC 20%] and [SOC 50%] respectively represent average voltage values at a SOC of 20% and 50%.

4. The negative electrode active material of claim 1, wherein each of the coarse graphite particles and the fine graphite particles includes a coating layer on a surface thereof, and the coating layer has a thickness ranging from 5 nm to 100 nm.

5. The negative electrode active material of claim 1, wherein the coarse graphite particles and the fine graphite particles are artificial graphite, natural graphite, or a combination thereof.

6. The negative electrode active material of claim 5, wherein the artificial graphite, natural graphite, or the combination thereof is derived from coal-based needle coke (calcined or green), isotropic coke (calcined or green), petroleum-based needle coke (calcined or green), general coke (calcined or green), or a combination thereof.

7. The negative electrode active material of claim 1, wherein the average particle diameter (D50) is in the range of 5 $\mu$m to 20 $\mu$m.

8. The negative electrode active material of claim 1, wherein the average particle diameter (D50) is in the range of 12.5 $\mu$m to 18.5 $\mu$m.

9. The negative electrode active material of claim 1, wherein a span value (D90 - D10) / D50 is 1.30 or less.

10. The negative electrode active material of claim 1, wherein a specific surface area (BET) is in the range of 0.50 to 1.80 $m^2$/g.

11. The negative electrode active material of claim 1, wherein a tap density is in the range of 0.70 to 1.20 g/cc.

12. The negative electrode active material of claim 1, wherein an orientation ratio ($I_{004}$ / $I_{001}$) is in the range of 1.7 to 2.5, wherein $I_{004}$ and $I_{001}$ represent the peak intensities of the (004) plane and the (001) plane, respectively.

13. A negative electrode for a lithium secondary battery, comprising: 96 wt% to 99 wt% of the negative electrode active material of any one of claims 1 to 12; 0.5 wt% to 1.5 wt% of a thickener; and the balance of a binder.

14. A lithium secondary battery comprising: the negative electrode of claim 13; a positive electrode comprising a positive electrode active material; and an electrolyte.

15. A method for manufacturing a negative electrode active material, comprising: preparing at least one coarse carbon particle having an average particle diameter (D50) of 5 $\mu$m to 20 $\mu$m and at least one fine carbon particle having an average particle diameter (D50) of less than 5 $\mu$m; carbonizing each of the coarse carbon particle and the fine carbon particle; graphitizing each of the carbonized coarse carbon particle and fine carbon particle; coating each of the graphitized coarse graphite particle and fine graphite particle; and mixing the coated coarse graphite particles and fine graphite particles such that the fine graphite particles are present in an amount of 5 wt% to 20 wt%.

16. The method of claim 15, wherein the coarse carbon particle and the fine carbon particle are derived from coal-based needle coke (calcined or green), isotropic coke (calcined or green), petroleum-based needle coke (calcined or green), general coke (calcined or green), or a combination thereof.

17. The method of claim 15, wherein the step of preparing the coarse carbon particle comprises pulverizing the coarse carbon particle to have a particle diameter ranging from 5 $\mu$m to 10 $\mu$m.

18. The method of claim 15, wherein the step of carbonizing each of the coarse carbon particle and the fine carbon particle comprises mixing a coating material in an amount of 3 parts by weight to 30 parts by weight based on 100 parts by weight of each of the carbonized coarse carbon particle and fine carbon particle to form secondary particles.

19. The method of claim 15, wherein the step of graphitizing each of the carbonized coarse carbon particle and fine carbon particle is performed at a temperature of 2,800°C or higher.

20. The method of claim 15, wherein the step of coating each of the graphitized coarse graphite particle and fine graphite particle comprises mixing a coating material in an amount of 1 part by weight to 5 parts by weight based on 100 parts by weight of each of the graphitized coarse graphite particle and fine graphite particle to produce coated particles.

[Fig. 1]

[Fig. 2]

| | |
|---|---|
| a step (S100) of preparing at least one coarse carbon particle and at least one fine carbon particle | S100 |
| a step (S200) of carbonizing the coarse carbon particle and the fine carbon particle separately | S200 |
| a step (S300) of graphitizing the respective carbonized coarse carbon particles and fine carbon particles | S300 |
| a step (S400) of coating the respective graphitized coarse graphite particles and fine graphite particles | S400 |
| a step (S500) of mixing the coated coarse graphite particles and fine graphite particles | S500 |

[Fig. 3a]

[Fig. 3b]

[Fig. 3c]

[Fig. 3d]

[Fig. 4a]

[Fig. 4b]

[Fig. 5]

## INTERNATIONAL SEARCH REPORT

| International application No. |
|---|
| **PCT/KR2023/020699** |

| | |
|---|---|
| **A. CLASSIFICATION OF SUBJECT MATTER** | |

**H01M 4/36**(2006.01)i; **H01M 4/587**(2010.01)i; **H01M 4/133**(2010.01)i; **H01M 10/052**(2010.01)i; **C01B 32/22**(2017.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01B 32/205(2017.01); C01B 32/21(2017.01); H01M 10/052(2010.01); H01M 4/133(2010.01); H01M 4/48(2010.01); H01M 4/583(2010.01); H01M 4/587(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 음극 활물질(anode active material), 코크스(cokes), 평균입경(average particle diameter), 흑연 입자(graphite particle)

**C. DOCUMENTS CONSIDERED TO BE RELEVANT**

| Category* | Citation of document, with indication, where appropriate, of the relevant passages | Relevant to claim No. |
|---|---|---|
| X | KR 10-2017-0075661 A (LG CHEM, LTD.) 03 July 2017 (2017-07-03)<br>See paragraphs [0057]-[0060], [0089]-[0090], [0141]-[0145], [0149]-[0153], [0180]-[0184] and [0192]-[0196]; and claims 1 and 10-11. | 1-8,12-20 |
| Y | | 9-11 |
| Y | KR 10-2020-0076498 A (POSCO et al.) 29 June 2020 (2020-06-29)<br>See abstract; paragraph [0017]; and claims 1 and 6. | 9-11 |
| A | KR 10-2014-0147240 A (LG CHEM, LTD.) 30 December 2014 (2014-12-30)<br>See entire document. | 1-20 |
| A | JP 2013-008526 A (HITACHI CHEM CO., LTD.) 10 January 2013 (2013-01-10)<br>See entire document. | 1-20 |

☑ Further documents are listed in the continuation of Box C.     ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **20 March 2024** | **22 March 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**EP 4 645 453 A1**

### INTERNATIONAL SEARCH REPORT

International application No.

**PCT/KR2023/020699**

**C.     DOCUMENTS CONSIDERED TO BE RELEVANT**

| Category* | Citation of document, with indication, where appropriate, of the relevant passages | Relevant to claim No. |
|---|---|---|
| A | KR 10-2021-0007273 A (SAMSUNG SDI CO., LTD.) 20 January 2021 (2021-01-20)<br>See entire document. | 1-20 |

Form PCT/ISA/210 (second sheet) (July 2022)

21

**INTERNATIONAL SEARCH REPORT**
Information on patent family members

International application No.

**PCT/KR2023/020699**

| Patent document cited in search report | | | Publication date (day/month/year) | Patent family member(s) | | | Publication date (day/month/year) |
|---|---|---|---|---|---|---|---|
| KR | 10-2017-0075661 | A | 03 July 2017 | CN | 107851795 | A | 27 March 2018 |
| | | | | CN | 107851795 | B | 01 December 2020 |
| | | | | EP | 3297073 | A1 | 21 March 2018 |
| | | | | EP | 3297073 | A4 | 21 March 2018 |
| | | | | EP | 3297073 | B1 | 22 May 2019 |
| | | | | JP | 2018-523912 | A | 23 August 2018 |
| | | | | JP | 6621926 | B2 | 18 December 2019 |
| | | | | KR | 10-2088491 | B1 | 13 March 2020 |
| | | | | US | 10439221 | B2 | 08 October 2019 |
| | | | | US | 2018-0190985 | A1 | 05 July 2018 |
| KR | 10-2020-0076498 | A | 29 June 2020 | KR | 10-2176343 | B1 | 09 November 2020 |
| KR | 10-2014-0147240 | A | 30 December 2014 | | None | | |
| JP | 2013-008526 | A | 10 January 2013 | JP | 5927788 | B2 | 01 June 2016 |
| KR | 10-2021-0007273 | A | 20 January 2021 | US | 2021-0013493 | A1 | 14 January 2021 |

Form PCT/ISA/210 (patent family annex) (July 2022)